# FASCICULE DE BREVET EUROPEEN

(11) **EP 2 743 209 B1**
(45) Date de publication et mention de la délivrance du brevet: **27.04.2016**
(21) Numéro de dépôt: 13197050.1
(22) Date de dépôt: 13.12.2013
(51) Int. Cl.: B65D 88/76, B65D 88/18, E03F 11/00, E03B 3/03

(54) **Cuve de traitement d'eaux destinée à être enterrée, comprenant une paroi externe présentant des éléments en saillie**
Wasseraufbereitungstank zum Vergraben, der eine Außenwand mit vorspringenden Elementen umfasst
Water treatment vessel intended for being buried, including an outer wall having projecting elements

(30) Priorité: 17.12.2012 FR 1262116
(43) Date de publication de la demande: 18.06.2014
(73) Titulaire: INNOCLAIR, 29830 Ploudalmezeau (FR)
(72) Inventeur: Guyader, Jean-Pierre, 29830 Ploudalmezeau (FR)
(74) Mandataire: Gicquel, Frédéric

(56) Documents cités:
- WO-A1-02/066753
- US-A- 5 806 702

## Description

Le domaine de l'invention concerne la conception et la fabrication des équipements de traitement des eaux usées. Plus précisément, l'invention concerne une station d'épuration individuelle, du type intégrant un bassin d'aération et un bassin de clarification, ce dernier mettant en oeuvre une cloison siphoïde.

Dans le cadre de l'assainissement non collectif, on distingue les habitations reliées au réseau de collecte de leur commune et celles qui ne le sont pas. Jusqu'à récemment, les habitations non reliées au réseau de collecte étaient équipées généralement, voire dans le meilleur des cas, d'une fosse septique pour le traitement des eaux usées domestiques (hors eaux pluviales) associée à un bac à sable filtrant.

L'évolution des normes et réglementations impose désormais aux habitations non reliées au réseau de collecte de leur commune de disposer d'un système d'assainissement individuel, visant à renvoyer au milieu naturel les eaux traitées d'une qualité satisfaisante prédéterminée.

Les textes actuellement en vigueur définissent l'assainissement individuel, autrement désigné par assainissement non collectif (ANC) comme correspondant à « tout système d'assainissement effectuant la collecte, le prétraitement, l'épuration, l'infiltration ou le rejet des eaux usées domestiques des immeubles non raccordés au réseau public d'assainissement ».

Dans ce contexte, une solution pour les particuliers non reliés au réseau de collecte de leur commune consiste à recourir à l'installation d'une micro-station d'épuration.

Une micro-station d'épuration peut se définir comme une solution de traitement des eaux usées domestiques, fonctionnant à échelle réduite selon le même principe qu'une station d'épuration urbaine, ceci par la mise en oeuvre d'un procédé dit « à boue activée » ou « à culture fixée ».

Le procédé de traitement « à boue activée » consiste à mettre à contribution les micro-organismes ou les bactéries présents dans les eaux à traiter en vue de dégrader les matières organiques présentes dans les dites eaux, ceci sans recourir à l'adjonction de produits chimiques.

Un tel traitement permet de rejeter les eaux traitées directement dans le milieu naturel ou, alternativement, de les utiliser en infiltration.

On distingue, parmi les effluents rejetés par une habitation, deux catégories, à savoir :
- les « eaux grises », correspondant aux eaux provenant des lavabos, lave-linges, douche, etc ;
- les « eaux-vannes », correspondant aux eaux rejetées par les toilettes.

L'ensemble de ces effluents contient :
- des matières organiques ;
- des matières azotées et phosphorées ;
- des micro-organismes pathogènes ;
- des matières en suspension pouvant provoquer des maladies, de la pollution organique et de l'eutrophisation.

Classiquement, les micro-stations d'épuration sont conçues pour réaliser les phases de traitement suivantes :
- la décantation, visant à retenir au fond de la cuve les matières les plus lourdes et à faire remonter en surface les plus légères ;
- l'aération, selon laquelle les « boues » en suspension subissent un traitement d'épuration, ceci en créant de manière séquentielle des périodes aérobies et des périodes d'anoxie, ce qui va permettre d'engendrer un phénomène de digestion des matières organiques, ainsi qu'une réduction des nitrates et des nitrites ;
- la clarification (éventuellement précédée d'une pré-clarification), visant à séparer les boues légères persistantes de l'eau épurée : dans cette phase, les boues restantes sont renvoyées dans le bassin de décantation ou dans le bassin de réaction, tandis que l'eau épurée est extraite de la micro-station pour être en général dispersée dans le sol, ou rejetée au fossé.

Les avantages des micro-stations sont notamment les suivants :
- elles mettent en oeuvre des procédés de traitement écologique et n'utilisent aucun produit chimique pour traiter les eaux usées ;
- la surface au sol de la micro-station est notablement limitée et ne nécessite pas d'épandage sous-terrain, ce qui permet de les installer même dans des petits terrains, éventuellement avec un dénivelé ;
- elle ne dégage pas d'odeurs.

En revanche, le traitement « à boue activée » implique un apport régulier de matières organiques pour permettre aux bactéries de se développer et donc de traiter les eaux. Aussi, une absence prolongée d'écoulement d'eau dans la micro-station impliquera la nécessité de réactivation des bactéries.

Selon l'art antérieur, on distingue deux types de micro-station d'épuration :
- les stations opérant une épuration par boue activée, telle que décrite précédemment ;
- les stations à culture fixée dans lesquelles les micro-organismes chargés du traitement se fixent sur un support en fond de cuve.

L'invention concerne notamment les stations opérant un traitement dit « à boue activée, et peut s'appliquer à tout type de traitement, notamment par « cultures fixées ». L'invention peut s'appliquer en outre aux cuves constituant de simples réservoirs d'eau, des fosses toutes eaux ou des citernes à gaz enterrées.

Schématiquement, les micro-stations sont des cuves constituant des réservoirs d'eau contenant un ensemble de mécanismes (compresseur d'air, pompe, tableau électrique...) et généralement destinés à être enterrés.

Une fois enterrés, ces cuves subissent la pression du sol qui s'exerce sur les parois du réservoir et qui engendre un risque d'écrasement latéral et/ou vertical de la cuve. De plus, le principe d'Archimède se vérifie quand de l'eau est présente dans le sol dans lequel la micro-station est enterrée, ce qui peut conduire à soulever la cuve sous la pression de l'eau au point de nécessiter une intervention de génie civil.

En effet, pour limiter ce risque, les entreprises de génie civil utilisent classiquement du béton en tant que dalle de lestage basse ou haute, ainsi que des sangles d'arrimage qui accrochent la cuve au béton. En outre, un puits de décompression peut être réalisé pour dégager la pression de l'eau vers la surface. Parallèlement, les fabricants de cuves utilisent des renforts latéraux, horizontaux ou verticaux, pour permettre à la cuve de la micro-station de résister à la pression.

On comprend que l'installation d'une micro-station d'épuration nécessite donc une attention particulière en termes de génie civil afin de pallier tout risque de remontée de la cuve sous l'effet de la pression de l'eau présente dans le sol.

En tout état de cause, ces opérations sont relativement longues, fastidieuses et couteuses à réaliser.

Il est connu du document US5806702 un réservoir d'eaux usées dont la paroi externe présente des éléments en saillie. Le document WO02066753 présente un conduit formant trou d'homme, présentant également une paroi externe avec des éléments en saillie.

Par ailleurs, les micro-stations d'épuration par boue activée donnent globalement satisfaction selon les critères d'épuration actuels.

Toutefois, on peut déplorer dans certains cas que l'eau sortant d'une micro-station d'épuration soit insuffisamment traitée, voire que la station fasse l'objet d'un départ de boue qui peut être dû à une absence prolongée, comme mentionné précédemment, ou à un rejet d'un produit d'entretien ménager qui neutralise les bactéries, ou encore à une coupure d'électricité au cours de laquelle le compresseur servant au cycle d'aération ne fonctionne plus.

Il existe donc un besoin d'optimisation du fonctionnement des micro-stations d'épuration.

Dans le contexte des stations d'épuration collectives, c'est-à-dire de grandes dimensions, les cloisons siphoïdes sont utilisées pour délimiter une zone siphoïde d'eau à évacuer (donc traitée), à la base de laquelle est formé un passage de dimensions réduites dans lequel s'écoule une eau faiblement chargée en matières en suspension.

Ce principe est actuellement très peu utilisé dans les micro-stations d'épuration, et ne permet pas en tout état de cause de supprimer les phénomènes de départ de boue.

L'invention a notamment pour objectif de pallier les inconvénients de l'art antérieur.

Plus précisément, l'invention a pour objectif de proposer une cuve qui soit plus simple et plus rapide à installer que les cuves de traitement et/ou de stockage d'eaux de l'art antérieur.

En ce sens, l'invention a pour objectif de limiter notablement les opérations de génie civil liées à l'installation de la micro-station d'épuration dans le sol.

L'invention a également pour objectif de fournir une telle cuve destinée à constituer une micro-station d'épuration d'eaux usées domestiques, par boue activée, qui produise une eau traitée d'une qualité satisfaisante en toutes circonstances ou quasiment.

Ces objectifs, ainsi que d'autres qui apparaîtront par la suite, sont atteints grâce à l'invention qui a pour objet une cuve de traitement et/ou de stockage d'eaux destinée à être enterrée, comprenant une paroi externe délimitant une enceinte de traitement, notamment celle d'une micro-station d'épuration,, la paroi externe présentant des éléments en saillie présentant chacun une surface d'appui essentiellement plane contre laquelle un matériau de remblaiement est susceptible d'exercer une force dirigée vers le fond de la cuve, caractérisée en ce que les éléments en saillie présentent une section de forme triangulaire.

Ainsi, grâce à l'invention, le simple fait de remblayer autour de la cuve de traitement d'eaux placée dans une excavation assure le maintien de la cuve au fond de l'excavation. En effet, les graviers et les sables (généralement utilisés pour remblayer, pour leur fluidité) vont épouser les contours de la forme extérieure de la cuve, exerçant ainsi une poussée vers le bas sur les éléments en saillie.

L'opération d'installation de la cuve est donc grandement facilitée et raccourcie, dans la mesure où il n'est plus nécessaire de faire une dalle de béton et/ou de puits de décompression.

En outre, comme cela va apparaître plus clairement par la suite, les éléments en saillie assurent également une fonction de renfort de la cuve.

Selon une solution préférée, pour chaque élément en saillie, la surface d'appui surplombe une surface inférieure, l'inclinaison de la surface d'appui par rapport à une ligne horizontale étant de α3 et l'inclinaison de la surface inférieure par rapport à une ligne horizontale étant de α4, avec α3 < α4.

On obtient de cette façon un bon compromis entre l'inclinaison de la surface d'appui, pour que la force du matériau de remblaiement sur celle-ci s'exerce essentiellement vers le fond de la cuve, et l'inclinaison de la surface inférieure qui contribue au bon écoulement du matériau de remblaiement entre la cuve et l'excavation.

Selon une solution avantageuse, les éléments en saillie forment au moins une ceinture périphérique, et avantageusement au moins deux ceintures périphériques jointives verticalement (sans espace entre elles).

Préférentiellement, les éléments en saillie forment trois ceintures périphériques les unes au-dessus des autres.

Une telle disposition en ceintures contribue à :
- augmenter la surface d'appui pour les remblais ;
- contribuer au renfort tant vertical qu'horizontal de la cuve.

Selon un mode de réalisation particulier, les éléments en saillie apparaissent également à l'intérieur de la cuve.

Selon une autre caractéristique avantageuse, dans laquelle la cuve de traitement d'eaux selon l'invention inclut au moins deux enceintes d'une station d'épuration individuelle, l'une d'aération et l'autre de clarification, les eaux à épurer passant de l'une dans l'autre, l'enceinte de clarification étant reliée à un conduit de sortie par une zone siphoïde délimitée par une cloison siphoïde, un matériau filtrant est disposé dans la zone siphoïde de telle sorte les eaux passent par le matériau filtrant, celui-ci étant destiné à fixer les matières en suspension dans les eaux.

De cette façon, on obtient une cuve de traitement constituant une station d'épuration individuelle produisant une eau traitée de meilleure qualité qu'avec les stations d'épuration individuelles de l'art antérieur, ceci en toutes circonstances.

En effet, les actions combinées de l'aération/clarification d'une part et, d'autre part, du matériau filtrant, conduit à un traitement optimal des eaux usées domestiques.

En outre, les stations d'épuration individuelles selon l'invention suppriment, ou à tout le moins limitent, les risques de départ de boue, de par la présence du matériau filtrant.

On note de plus que la disposition du matériau filtrant dans la zone siphoïde s'avère particulièrement efficace dans la mesure où les eaux présentes dans la zone siphoïde sont les moins chargées en matières en suspension. L'action du matériau filtrant est donc largement suffisante par rapport à la quantité de matières en suspension présentes dans la zone siphoïde. Il en résulte par ailleurs que le matériau filtrant s'encrasse moins rapidement en étant présent dans cette zone et, par conséquent, il n'est nécessaire de procéder à son remplacement qu'avec une fréquence relativement faible.

On note toutefois que l'invention s'applique à tout type de cuve de traitement d'eau et ne se limite donc pas à son application dans un traitement par boue activée. L'invention s'applique en outre au simple stockage d'eaux, la cuve constituant par exemple une réserve d'eaux de pluie, ou une fosse toutes eaux enterrée, ou encore une citerne à gaz enterrée.

Préférentiellement, le matériau filtrant est disposé en partie supérieure de la zone siphoïde.

Cette caractéristique contribue à améliorer les effets énoncés ci-avant, dans la mesure où plus le matériau filtrant est placé haut dans la station, moins il y a possiblement de matières en suspensions dans les eaux au niveau où il est placé.

Selon une caractéristique avantageuse d'une station d'épuration individuelle mettant en oeuvre une cuve de traitement d'eau selon l'invention, dans laquelle l'enceinte de clarification est délimitée par une paroi de séparation commune avec l'enceinte d'aération et par une paroi de sortie reliées par deux parois latérales, la cloison siphoïde est préférentiellement disposée face à l'une des parois latérales.

Dans ce cas, la cloison siphoïde s'étend à partir de son extrémité inférieure au voisinage de ladite paroi latérale et s'écarte de celle-ci en remontant jusqu'à délimiter un espace de stockage dudit matériau filtrant.

Avantageusement, le matériau filtrant est présent dans un bac disposé de façon amovible dans un espace de stockage s'étendant entre la paroi latérale et la cloison siphoïde.

Le matériau filtrant est ainsi aisément accessible, et peut être facilement et rapidement remplacé en cas de besoin.

Préférentiellement, le bac contenant l'élément filtrant présente une forme adaptée à la forme des éléments en saillie.

D'autres caractéristiques et avantages de l'invention apparaitront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective éclatée d'une station d'épuration individuelle mettant en oeuvre une cuve selon l'invention ;
- la figure 2 est une vue de dessus d'une cuve de traitement d'eaux selon l'invention ;
- la figure 3 est une vue partielle d'une cuve de traitement d'eaux selon l'invention, schématisant l'intérieur de l'enceinte de clarification ;
- la figure 4 est une vue en coupe transversale partielle des éléments en saillie d'une cuve d'une cuve selon l'invention.

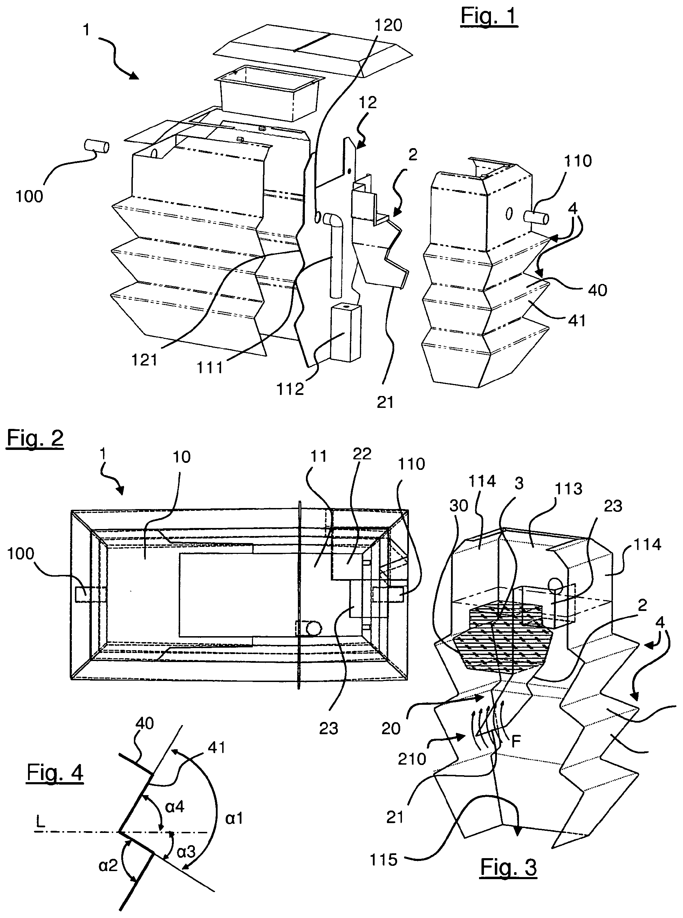

Le principe de l'invention apparaît clairement à la lecture des figures 1 et 3. Tel qu'illustré par ces figures, une cuve 1 de traitement et/ou de stockage d'eau selon l'invention présente une paroi externe présente des éléments en saillie 4.

Chacun de ces éléments en saillie présente une surface d'appui 40, essentiellement plane, contre laquelle un matériau de remblaiement est susceptible d'exercer une force dirigée vers le fond 115 de la cuve et donc vers le fond de l'excavation dans lequel est installée la cuve.

Préférentiellement, les éléments en saillie 4 forment au moins une ceinture autour de la cuve, et préférentiellement trois (voire plus) ceintures réparties sur la hauteur de la cuve tel qu'illustré par la figure 1.

En référence aux figures 1 et 3, les éléments en saillie 4 présentent une section de forme triangulaire, comprenant notamment une surface d'appui 40 surplombant une surface inférieure 41.

La surface d'appui 40 des éléments en saillie peut être horizontale ou légèrement inclinée vers le bas.

Selon un mode de réalisation particulier illustré par la figure 4, les éléments en saillie sont conçus avec les inclinaisons suivantes :
- la surface d'appui 40 forme, avec la surface inférieure 41 d'un même élément en saillie, un angle α1 d'environ 90° ;
- la surface d'appui 40 forme avec une ligne L horizontale (quand le fond de la cuve est lui-même dans un plan horizontal) un angle α3 compris entre environ 38°et 45°;
- la surface inférieure 41 forme avec une ligne L horizontale (quand le fond de la cuve est lui-même dans un plan horizontal) un angle α4 compris entre environ 45°et 52°.

En tout état de cause, on prévoit des inclinaisons des surfaces d'appui 40 et 41 de telle sorte que α3 < α4. On note que, selon le présent mode de réalisation, les extrémités externes des éléments en saillie sont disposées les unes au-dessus des autres de façon à s'inscrire dans un même plan vertical.

Toutefois, il est également envisageable que la cuve présente une forme externe différente, par exemple cylindrique, pyramidale...

Outre le fait de favoriser le maintien de la cuve au fond de l'excavation une fois celle-ci remblayée, on note que ces éléments en saillie contribuent également au renforcement de la structure de la cuve vis-à-vis des risques d'écrasement vertical ou horizontal.

De plus, les valeurs d'angles indiqués précédemment sont optimisées pour favoriser le remplissage de l'espace entre la paroi externe de la cuve et les parois de l'excavation par le matériau de remblaiement. En effet, les inclinaisons des surfaces d'appui des éléments en saillie facilitent en quelques sortes l'écoulement du matériau de remplissage, en particulier entre deux éléments en saillie, c'est-à-dire dans la cavité qu'ils délimitent.

Par ailleurs, en référence aux figures 1 et 2, une cuve 1 selon l'invention peut se présenter sous la forme d'une station d'épuration individuelle incluant, selon le présent mode de réalisation, deux enceintes, à savoir :
- une enceinte d'aération 10 ;
- une enceinte de décantation/clarification 11.

En partie supérieure de la station, un bac est prévu pour recevoir un tableau électrique destiné à alimenter un compresseur (non représenté) à partir duquel s'étend un conduit d'air débouchant dans l'enceinte d'aération 10.

Le compresseur de l'enceinte d'aération est programmé pour effectuer des cycles successifs d'aération des eaux présentes dans l'enceinte d'aération. On rappelle effectivement que l'enceinte d'aération a pour but d'effectuer des phases successives d'aérobies et d'anoxie, en vue de provoquer une digestion des matières organiques présentes dans les eaux à traiter.

Tel que cela apparait sur la figure 1, un conduit 100 débouche dans l'enceinte d'aération, les eaux à traiter arrivant dans la station par ce conduit 100.

L'enceinte d'aération est séparée de l'enceinte de décantation/clarification par une paroi de séparation 12 dans laquelle est ménagé un orifice 120 communiquant avec un tuyau 111, s'étendant vers le fond de l'enceinte de clarification.

Lorsque le niveau augmente dans l'enceinte d'aération, ceci dû à l'arrivée d'eau par le conduit 100, jusqu'à atteindre l'orifice 120, de l'eau passe de l'enceinte d'aération vers l'enceinte de décantation/clarification par le tuyau 111.

L'enceinte de décantation/clarification intègre une pompe 112, activée par cycles successifs programmés, permettant de :
- laisser décanter les matières en suspension en phase de non fonctionnement de la pompe ;
- pomper les boues décantées (donc non digérées) et les renvoyer vers l'enceinte d'aération, par l'intermédiaire d'un tuyau (non représenté).

Un conduit 110 de sortie s'étend à partir de l'enceinte de décantation/clarification, pour permettre la sortie des eaux traitées. Ce conduit 110 est prévu en partie supérieure de l'enceinte de décantation/clarification. Par conséquent, il est nécessaire que le niveau d'eau augmente suffisamment dans l'enceinte de décantation/clarification, pour atteindre le niveau du conduit de sortie.

Lorsque le niveau d'eau augmente dans l'enceinte de décantation/clarification, les matières en suspension les plus lourdes décantent pendant la phase de non fonctionnement de la pompe 112, tandis que seules les matières en suspension les plus fines et les plus légères peuvent éventuellement remonter avec le niveau d'eau.

En outre, une zone de siphoïde 20 constitue un passage obligé de circulation des eaux dans la station, reliant le volume interne de l'enceinte de clarification au conduit de sortie. Cette zone siphoïde, dans laquelle les eaux sont faiblement chargées en matières en suspension, est délimitée par une cloison siphoïde décrite plus en détails par la suite.

Avantageusement, un matériau filtrant 3 est disposé dans la zone siphoïde 20 délimitée par la cloison siphoïde 2, ce matériau filtrant s'étendant de telle sorte que les eaux passent obligatoirement par le matériau filtrant, celui-ci étant destiné à fixer des matières en suspension dans les eaux.

Selon un mode de réalisation préférentiel, le matériau filtrant est constitué par de la pouzzolane (ou roche volcanique).

Selon des variantes envisageables, ce matériau filtrant peut également être constitué en tout ou partie par :
- de la zéolite ;
- du sable ;
- de l'éponge ;
- un matériau industriel du type en nid d'abeille.

En référence à la figure 3, on note que l'enceinte de décantation/clarification est délimitée par :
- la paroi de séparation 12 mentionnée précédemment ;
- la paroi de sortie 113, à partir de laquelle s'étend le conduit de sortie ;
- des parois latérales 114, reliant la paroi de séparation 12 et la paroi de sortie 113.

Selon le présent mode de réalisation, la paroi siphoïde 2 est disposée de façon à faire face à l'une des parois latérales 114.

Plus précisément, la cloison siphoïde s'étend à partir de son extrémité inférieure 21 au voisinage d'une des parois latérales 114 et remonte vers la partie supérieure de l'enceinte de décantation/clarification, ceci en s'écartant de la paroi latérale 114 correspondante, jusqu'à délimiter un espace de stockage 22 du matériau filtrant 3. Au-dessus de cet espace de stockage, la cloison siphoïde 2 se prolonge de façon à constituer un caisson 23 pourvu d'un fond, à l'intérieur duquel débouche le conduit de sortie. Cette partie de forme quasi cubique est donc la zone de prélèvement d'échantillons.

L'espace de stockage s'étend donc entre la cloison siphoïde, au-dessus de la partie inclinée de celle-ci, et la paroi latérale, au niveau où l'élément en saillie le plus haut de la cuve forme, à l'intérieur de la cuve, une concavité.

Le matériau filtrant 3 est présent dans un bac 30 disposé de façon amovible dans l'espace de stockage.

Par ailleurs, comme cela apparaît sur la figure 3, les éléments en saillie 4 de la paroi externe apparaissent également à l'intérieur de la station.

Dans ce cas, l'angle α2 (figure 4) entre la surface supérieure 40 et la surface inférieure 41 des éléments en saillie, à l'intérieur de la cuve, est égale à l'angle α1, côté extérieur, soit environ 90°.

Il en résulte que la paroi de séparation 12 présente des bords latéraux 121 de forme complémentaire des éléments en saillie.

De plus, le bac contenant l'élément filtrant présente lui aussi une forme adaptée à la forme des éléments en saillie.

De ce fait, ce bac filtrant et ce regard de prélèvement sont mis en place en usine, et viennent reposer verticalement contre la partie inclinée de la paroi siphoïde d'une part et, d'autre part, contre la surface inférieure d'un élément en saillie.

## Revendications

1. Cuve destinée à être enterrée, susceptible de contenir de l'eau ou du gaz, comprenant une paroi externe délimitant une enceinte de traitement, notamment celle d'une micro-station d'épuration,
la paroi externe présentant des éléments en saillie (4) présentant chacun une surface d'appui (40) essentiellement plane contre laquelle un matériau de remblaiement est susceptible d'exercer une force dirigée vers le fond de la cuve, **caractérisée en ce que** les éléments en saillie (4) présentent une section de forme triangulaire.

2. Cuve selon la revendication 1, **caractérisée en ce que**, pour chaque élément en saillie, la surface d'appui (40) surplombe une surface inférieure (41), l'inclinaison de la surface d'appui (40) par rapport à une ligne horizontale étant de α3 et l'inclinaison de la surface inférieure (41) par rapport à une ligne horizontale étant de α4, avec α3 < α4.

3. Cuve selon la revendication 1, **caractérisée en ce que** les éléments en saillie (4) forment au moins une ceinture périphérique.

4. Cuve selon la revendication 2, **caractérisée en ce que** les éléments en saillie (4) forment trois ceintures périphériques les unes au-dessus des autres.

5. Cuve selon la revendication 1, **caractérisée en ce que** les éléments en saillie (4) apparaissent également à l'intérieur de la cuve.

6. Cuve selon la revendication 1, incluant au moins deux enceintes d'une station d'épuration individuelle, l'une d'aération (10) et l'autre de clarification (11), les eaux à épurer passant de l'une dans l'autre, l'enceinte de clarification étant reliée à un conduit de sortie (110) par une zone siphoïde (20) délimitée par une cloison siphoïde (2), **caractérisée en ce qu'**un matériau filtrant (3) est disposé dans la zone siphoïde (20) de telle sorte les eaux passent par le matériau filtrant, celui-ci étant destiné à fixer les matières en suspension dans les eaux.

7. Cuve selon la revendication 6, **caractérisée en ce que** le matériau filtrant (3) est disposé en partie supérieure de la zone siphoïde (20).

8. Cuve selon la revendication 6, dans laquelle l'enceinte de clarification (11) est délimitée par une paroi de séparation (12) commune avec l'enceinte d'aération (10) et par une paroi de sortie (113) reliées par deux parois latérales (114), **caractérisée en ce que** la cloison siphoïde (2) est disposée face à l'une des parois latérales (114).

9. Cuve selon la revendication 8, **caractérisée en ce que** le matériau filtrant (3) est présent dans un bac (30) disposé de façon amovible dans un espace de stockage (22) s'étendant entre la paroi latérale (114) et la cloison siphoïde (2).

10. Cuve selon la revendication 9, **caractérisée en ce que** le bac (30) contenant l'élément filtrant (3) présente une forme adaptée à la forme des éléments en saillie (4).

## Patentansprüche

1. Tank, der dazu bestimmt ist, vergraben zu werden, und der Wasser oder Gas enthalten kann, eine Außenwand umfassend, die eine Behandlungskammer, vor allem jene einer Kleinkläranlage einschließt, wobei die Außenwand überstehende Elemente (4) aufweist, die jeweils eine im Wesentlichen ebene Anlagefläche (40) aufweisen, an der ein Verfüllmaterial eine Kraft anlegen kann, die in Richtung des Tankbodens gerichtet ist, **dadurch gekennzeichnet, dass** die überstehenden Elemente (4) einen Querschnitt in Form eines Dreiecks aufweisen.

2. Tank nach Anspruch 1, **dadurch gekennzeichnet, dass** die Anlagefläche (40) für jedes überstehende Element eine untere Fläche (41) überragt, wobei die Neigung der Anlagefläche (40) im Verhältnis zu einer waagrechten Linie bei α3 liegt und die Neigung der unteren Fläche (41) im Verhältnis zu einer waagrechten Linie bei α4 liegt, wobei α3 < α4 ist.

3. Tank nach Anspruch 1, **dadurch gekennzeichnet, dass** die überstehenden Elemente (4) zumindest einen umlaufenden Gürtel bilden.

4. Tank nach Anspruch 2, **dadurch gekennzeichnet, dass** die überstehenden Elemente (4) drei umlaufende Gürtel bilden, die übereinander liegen.

5. Tank nach Anspruch 1, **dadurch gekennzeichnet, dass** die überstehenden Elemente (4) auch im Inneren des Tanks auftreten.

6. Tank nach Anspruch 1, zumindest zwei Kammern einer Kleinkläranlage umfassend, eine zum Belüften (10) und die andere zur Klärung (11), wobei die zu klärenden Wässer von einer zur anderen überlaufen, wobei die Klärkammer durch einen Geruchsverschlussbereich (20) mit einem Auslasskanal (110) verbunden ist, der durch eine Geruchsverschlusswand (2) eingegrenzt wird, **dadurch gekennzeichnet, dass** ein Filtermaterial (3) derart im Geruchsverschlussbereich (20) angeordnet ist, dass die Wässer durch das Filtermaterial strömen, wobei dieses dazu bestimmt ist, die in den Wässern enthaltenen Schwebeteilchen zu binden.

7. Tank nach Anspruch 6, **dadurch gekennzeichnet, dass** das Filtermaterial (3) im oberen Abschnitt des Geruchsverschlussbereichs (20) angeordnet ist.

8. Tank nach Anspruch 6, wobei die Klärkammer (11) durch eine gemeinsame Trennwand (12) mit der Belüftungskammer (10) und durch eine Auslaufwand (113) eingegrenzt wird, die durch zwei Seitenwände (114) verbunden sind, **dadurch gekennzeichnet, dass** die Geruchsverschlusswand (2) gegenüber einer der Seitenwände (114) angeordnet ist.

9. Tank nach Anspruch 8, **dadurch gekennzeichnet, dass** das Filtermaterial (3) in einem Behälter (30) vorhanden ist, der in abnehmbarer Form in einem Ablageraum (22) angeordnet ist, der sich zwischen der Seitenwand (114) und der Geruchsverschlusswand (2) erstreckt.

10. Tank nach Anspruch 9, **dadurch gekennzeichnet, dass** der Behälter (30), der das Filterelement (3) enthält, eine geeignete Form für die Form der überstehenden Elemente (4) aufweist.

## Claims

1. Tank intended to be buried, liable to contain water or gas, comprising an outer wall defining a treatment chamber, notably that of a sewage treatment micro-station,
the outer wall having projecting elements (4) each having an essentially plane bearing surface (40) against which a backfill material is liable to apply a force targeted towards the bottom of the tank, **characterised in that** the projecting elements (4) have a triangular-shaped cross-section.

2. Tank according to claim 1, **characterised in that**, for each projecting element, the bearing surface (40) overhangs a bottom surface (41),
the inclination of the bearing surface (40) with respect to a horizontal line being α3 and the inclination of the bottom surface (41) with respect to a horizontal line being α4, where α3 < α4.

3. Tank according to claim 1, **characterised in that** the projecting elements (4) form at least one peripheral belt.

4. Tank according to claim 2, **characterised in that** the projecting elements (4) form three peripheral belts on top of one another.

5. Tank according to claim 1, **characterised in that** the projecting elements (4) also appear inside the tank.

6. Tank according to claim 1, including at least two chambers of an individual sewage treatment station, one for aeration (10) and the other for clarification (11), the water to be treated passing from one into the other, the clarification chamber being connected to an outlet conduit (110) via a siphoniform zone (20) defined by a siphoniform partition (2),
**characterised in that** a filtering material (3) is arranged in the siphoniform zone (20) such that the water passes through the filtering material, said material being intended to bind the substance suspended in the water.

7. Tank according to claim 6, **characterised in that** the filtering material (3) is arranged in the upper part of the siphoniform zone (20).

8. Tank according to claim 6, wherein the clarification chamber (11) is defined by a common separating wall (12) with the aeration chamber (10) and by an outlet wall (113) connected by two side walls (114), **characterised in that** the siphoniform partition (2) is arranged facing one of the side walls (114).

9. Tank according to claim 8, **characterised in that** the filtering material (3) is present in a container (30) arranged removably in a storage area (22) extending between the side wall (114) and the siphoniform partition (2).

10. Tank according to claim 9, **characterised in that** the container (30) containing the filtering element (3) has a shape adapted to the shape of the projecting elements (4).
